# EUROPÄISCHE PATENTANMELDUNG

(11) **EP 2 031 145 A2**
(43) Veröffentlichungstag der Anmeldung: **04.03.2009**
(21) Anmeldenummer: 08017341.2
(22) Anmeldetag: 10.11.2006
(51) Int. Cl.: E04B 9/12

(54) **Abhängbare Innenraumdecke**

(30) Priorität: 16.02.2006 DE 202006002567 U
(62) Teilanmeldung aus: 06818456.3
(71) Anmelder: Survey Marketing+Consulting GMBH&CO. KG, 33602 Bielefeld (DE)
(72) Erfinder: Meyer, Peter, H., 33602 Bielefeld (DE); Rudolph, Horst, 33332 Gütersloh (DE)
(74) Vertreter: Gesthuysen, von Rohr & Eggert

(57) **Zusammenfassung**

Die Erfindung betrifft eine abhängbare, nicht tragende Innenraumdecke mit eine Längsrichtung der Decke definierenden Längsträgem (1) und eine Querrichtung der Decke definierenden, die Längsträger (1) seitlich verbindenden Querträgern (2), wobei die Querträger (2) von den Längsträgern (1) getragen werden und wobei die Längsträger (1) und die Querträger (2) als Strangpreßprofile aus Leichtmetall, insbesondere Aluminum, oder aus einem faserverstärkten Kunststoff ausgeführt sind, die einerseits geschlossene Hohlkammern (6) zur Versteifung, andererseits nach außen offene Aufnahmen (7) und Nuten (8) zur Anbringung von Montage- und Zusatzteilen bzw. zu Verbindungszwecken aufweisen. Zur werkzeuglosen Montierbarkeit der Längsträger (1) und Querträger (2) sind Verbindungsprofile (10) und Seitenadapter vorgesehen.

## Beschreibung

Gegenstand der Erfindung ist eine abhängbare, nicht tragende Innenraumdecke mit den Merkmalen des Oberbegriffs von Anspruch 1 bzw. 5.

Eine aus der Praxis bekannte abhängbare Innenraumdecke, von der die Erfindung ausgeht ("ceiling system" der SURVEY MARKETING + CONSULTING GmbH & Co. KG, Dokumentation 2005), weist eine Längsrichtung der Decke definierende Längsträger und eine Querrichtung der Decke definierende, die Längsträger seitlich verbindende Querträger auf. Die Querträger werden von den Längsträgern getragen. Zur Abhängung der Längsträger von einer tragenden Decke sind langgestreckte Tragelemente vorgesehen. Das Achsmaß der Innenraumdecke beträgt bevorzugt 3,0 m.

Die Längsträger der bekannten Innenraumdecke bestehen aus jeweils zwei voneinander beabstandeten, vertikal ausgerichteten Spanplatten, die über horizontal ausgerichtete, miteinander verschraubte Verbinderplatten und eine verzinkte Verbindungsstange miteinander verbunden sind. An der Verbindungsstange befindet sich ein nach oben ragender Aufhängehaken. Mehrere solcher Verbindungsstangen befinden sich über die Länge eines Längsträgers verteilt an diesem. Die Längsträger sind mittels Zugankern, Drahtseilen oder Gurten an einer tragenden Decke zu befestigen. Bei den Querträgern handelt es sich um einfache, vertikal ausgerichtete Spanplatten, die über Befestigungswinkel an den Längsträgern eingehängt und verschraubt werden.

Die bekannte abhängbare, nicht tragende Innenraumdecke, von der die Erfindung ausgeht (DE-A-197 09 823), weist Längsträger und Querträger in Form von relativ komplex gebildeten Strangpreßprofilen aus Leichtmetall, insbesondere aus Aluminium, bei leichterer Belastung auch aus faserverstärktem Kunststoff, auf. Geschlossene Hohlkammer in den Längsträgern und den Querträgern erbringen deren Biegesteifigkeit. Nach außen offene Aufnahmen und Nuten dienen der Anbringung von notwendigen Montage- und Zusatzteilen, der Verlegung von Kabeln oder der Verbindung.

Zur Verbindung von in Längsrichtung hintereinander angeordneten Längsträgern sowie von Längsträgern und Querträgern dienen bei dieser Innenraumdecke Knotenstücke, die im wesentlichen quaderförmig ausgeführt sind. Zur Verbindung der Längsträger und Querträger mit den Knotenstücken dienen eingeschraubte Verbindungsbolzen, die mit schlüssellochförmigen Ausnehmungen im Knotenstück zusammenwirken. Eine wackelfreie Verbindung bedarf des Einsatzes zusätzlicher, elastischer Abstandselemente. Das ist eine aufwendige Konstruktion.

Der Lehre liegt das Problem zugrunde, die bekannte abhängbare Innenraumdekke dahingehend zu verbessern, daß bei der Verbindung von Längsträgern und Querträgern weitestmöglich auf Werkzeug bei der Montage verzichtet werden kann.

Das zuvor aufgezeigte Problem ist in einer ersten Variante bei einer Innenraumdecke mit den Merkmalen des Oberbegriffs von Anspruch 1 durch die Merkmale des kennzeichnenden Teils von Anspruch 1 gelöst.

Das zuvor aufgezeigte Problem ist in einer zweiten Variante bei einer Innenraumdecke mit den Merkmalen des Oberbegriffs von Anspruch 5 durch die Merkmale des kennzeichnenden Teils von Anspruch 5 gelöst.

Bevorzugte Ausgestaltungen und Weiterbildungen der erfindungsgemäßen Innenraumdecke sind Gegenstand der Unteransprüche. Zu den einzelnen Besonderheiten der Ausgestaltungen wird im Rahmen der Erläuterung bevorzugter Ausführungsbeispiele anhand der Zeichnung näher Stellung genommen.

Im folgenden wird nun die Erfindung anhand einer lediglich Ausführungsbeispiele darstellenden Zeichnung näher erläutert. In der Zeichnung zeigt
- Fig. 1: in schematischer, perspektivischer Ansicht von unten eine Innenraumdecke gemäß der Erfindung,
- Fig. 2: in perspektivischer Ansicht ein Verbindungsprofil zur Verbindung von Längsträgern der Innenraumdecke aus Fig. 1,
- Fig. 3: in einer perspektivischen Ansicht von der Stirnseite her einen Längsträger für eine Innenraumdecke gemäß Fig. 1,
- Fig. 4: die Verbindung eines Längsträgers mit einem Querträger in drei Stufen des technischen Ablaufs (a, b, c),
- Fig. 5: in perspektivischer Ansicht einen Querträger für eine Innenraumdecke gemäß Fig. 1, in Fig. 5b eine Stirnplatte für einen solchen Querträger,

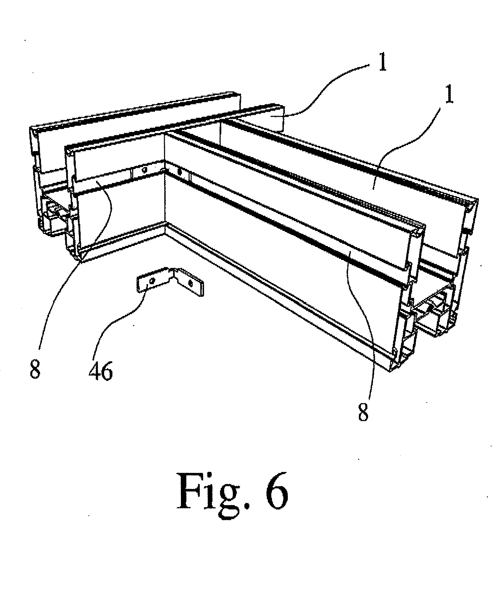

- Fig. 6: zwei Längsträger, verbunden mit einem Eckwinkel.

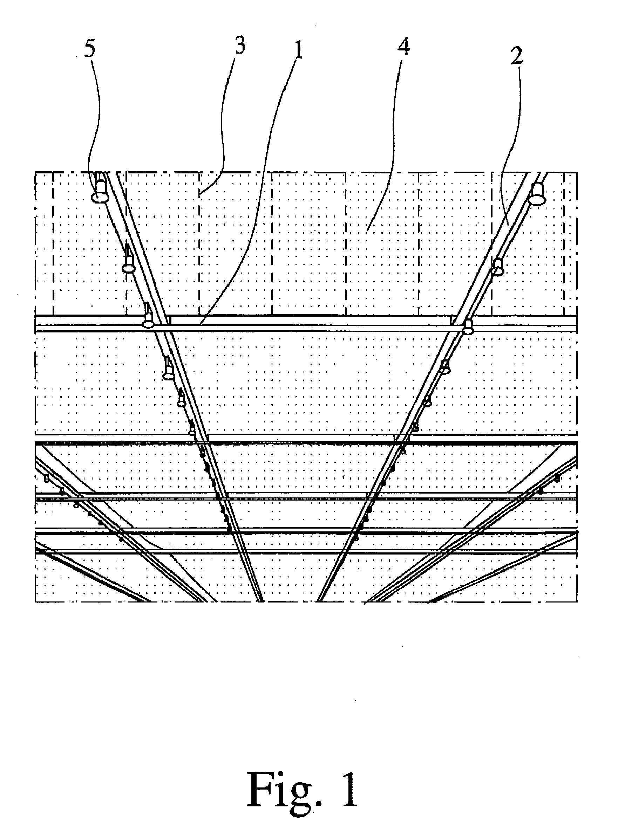

Die in Fig. 1 in einer perspektivischen Ansicht von unten und ausschnittweise dargestellte abgehängte, nicht tragende Innenraumdecke ist eine mobile Systemdecke für zeitlich begrenzten oder dauerhaften Einbau in Messehallen, Veranstaltungshallen, Verkaufsräumen, Verkehrseinrichtungen etc.. Sie wird aufgehängt an einer tragenden Decke (die in Fig. 1 nicht zu erkennen ist), dann handelt es sich um eine abgehängte, nicht tragende Innenraumdecke, sie kann aber auch mit Nutzung einer besonderen Variante der Erfindung auf Bodenstützen stehen, also aufgeständert angeordnet werden, Das ist insbesondere für sehr hohe Hallen eine interessante Alternative, insbesondere auch für den Messebau.

Die in Fig. 1 schematisch und zunächst einmal grundsätzlich dargestellte Innenraumdecke weist Längsträger 1 auf, die eine Längsrichtung der Innenraumdecke definieren. Im dargestellten Beispiel einer erfindungsgemäßen Innenraumdecke sind außerdem vorgesehen Querträger 2, die eine Querrichtung der Decke definieren und im dargestellten und bevorzugten Ausführungsbeispiel die Längsträger 1 seitlich verbinden. Grundsätzlich können, wie nachfolgend noch näher erläutert wird, die Längsträger 1 auch für sich eingesetzt werden. Jedenfalls ist es nicht unbedingt erforderlich, daß die Querträger 2 die Längsträger 1 seitlich miteinander verbinden. Im bevorzugten Ausführungsbeispiel ist das aber der Fall.

Die Längsträger 1 sind die tragenden Komponenten der Innenraumdecke, die Querträger 2 werden von den Längsträgern 1 getragen. Sofern die Längsträger 1 von einer Tragdecke abgehängt werden, erfolgt dies über langgestreckte Tragelemente 3, die in Fig. 1 verdeckt sind und daher nur gestrichelt angedeutet werden.

Die Darstellung in Fig. 1 macht ferner deutlich, daß der Deckencharakter dieser Anordnung aus Längsträgern 1 und Querträgern 2 dadurch erzielt wird, daß Gewebestoffbahnen 4 oberhalb von Längsträgern 1 und Querträgern 2 aufgelegt sind. Diese erstrecken sich zwischen in erster Linie den Längsträgern 1 und sind dort an den Längsträgern 1 vorzugsweise werkzeuglos befestigt. Das Achsmaß der Innenraumdecke wird durch die Querträger 2 im bevorzugten Ausführungsbeispiel auf etwa 3 m bemessen. Die Querträger 2 halten die Längsträger 1 auf Abstand in diesem Achsmaß, die Gewebestoffbahnen 4 können so dann sauber verspannt werden.

Zur werkzeuglosen Befestigung der Gewebestoffbahnen 4 an den Längsträgern 1 können beispielsweise Klettbandbefestigungen dienen, Statt der Gewebestoffbahnen 4 können auch Bahnen aus anderen Materialien, beispielsweise Kunststoffolien verwendet werden, beispielsweise aber auch Metallnetzbahnen. Interessant ist bei dieser Gestaltung der Innenraumdecke jedenfalls, daß oberhalb der Gewebestoffbahnen 4 angeordnete Leuchtmittel, beispielsweise Leuchtstoffröhren, ein diffuses Licht unter der Innenraumdecke im Nutzungsbereich entstehen lassen, also eine gewisse allgemeine Raumhelligkeit verbringen.

Bei der allgemeinen Übersichtsdarstellung in Fig. 1 erkennt man im übrigen, daß die Längsträger 1 und Querträger 2, hier in erster Linie die Querträger 2, als Träger für Strahler 5 genutzt werden, die zusätzlich zu der Grundhelligkeit bestimmte Beleuchtungseffekte zu erzielen erlauben. Dazu wird später noch einiges erläutert.

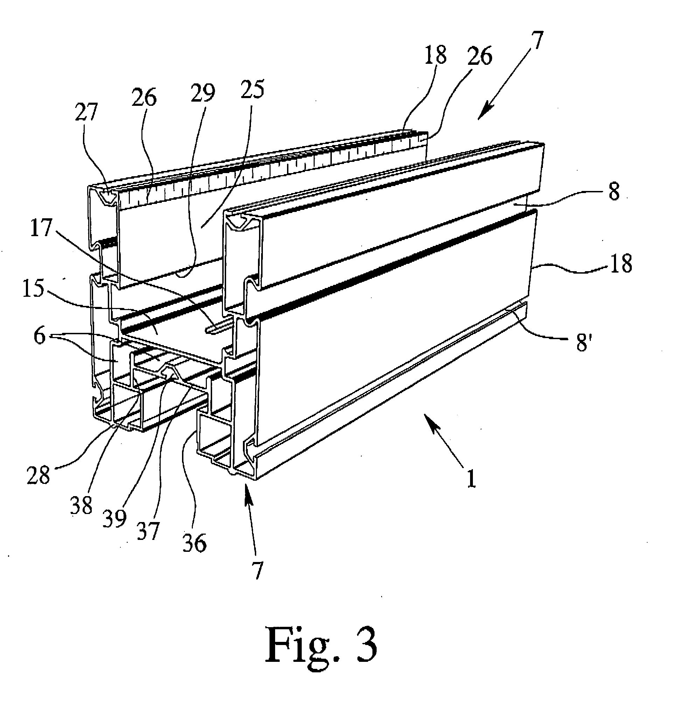

Aus der Fig. 3 erkennt man die besondere Gestaltung der Längsträger 1 und Querträger 2 der erfindungsgemäßen Innenraumdecke. Diese sind als Strangpreßprofile aus Leichtmetall, insbesondere aus Aluminium ausgeführt, Grundsätzlich ist es auch möglich, die Profile aus einem faserverstärkten Kunststoff auszuführen, wenn die zu erwartenden Belastungen geringer sind und/oder geringere Spannweiten vorliegen.

Die Längsträger 1 und Querträger 2 weisen einerseits geschlossene Hohlkammern 6 zur Versteifung, andererseits nach außen offene Aufnahmen 7 und Nuten 8 zur Anbringung von Montage- und Zusatzteilen bzw. zu Verbindungszwecken auf. Darauf wird im einzelnen später eingegangen.

Fig. 3 der Zeichnung zeigt in perspektivischer Ansicht die Stirnseiten der Längsträger 1 und Querträger 2 und ist deshalb für Erläuterungen zu den Querschnitten der Längsträger 1 und Querträger 2 besonders geeignet.

Zunächst ist zu erkennen, daß die Strangpreßprofile so gestaltet sind, daß die Längsträger 1 und die Querträger 2 Einschraubkanäle 9 kleinen Durchmessers aufweisen. Solche Einschraubkanäle 9 dienen dazu, selbstschneidende Schrauben zur Befestigung von Abschlußelementen, Stirnplatten o.dgl. einschrauben zu können. Ihr Durchmesser ist auf die Größe der vorgesehenen Schrauben abgestimmt. Das entspricht der üblichen Verfahrensweise bei Strangpreßprofilen insbesondere aus Leichtmetall, aber auch aus Kunststoff.

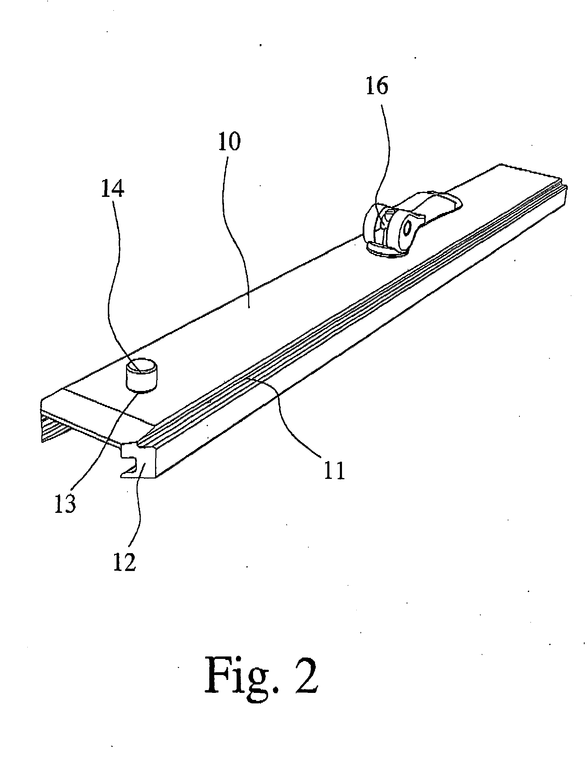

Eine Innenraumdecke der in Rede stehenden Art mit Längsträgern 1, die jeweils beispielsweise 6 m lang sind, bedarf natürlich einer Mehrzahl von in Längsrichtung hintereinander angeordneter Längsträger 1. Diese müssen untereinander vernünftig und belastbar verbunden werden, Nach einer bevorzugten Lehre der Erfindung erfolgt dies im vorliegenden Fall jeweils mittels eines sich in Längsrichtung innerhalb beider angrenzender Längsträger 1 erstreckenden Verbindungsprofils 10. Ein solches Verbindungsprofil 10 ist in Fig. 2 dargestellt. Es besteht im dargestellten, bevorzugten Ausführungsbeispiel ebenfalls aus Leichtmetall, insbesondere aus Aluminium, kann aber wiederum auch aus einem faserverstärkten Kunststoff bestehen, wenn die zu erwartenden Belastungsverhältnisse dies erlauben.

Das dargestellte und bevorzugte Verbindungsprofil 10 ist so gestaltet, daß es in die mittige, breite Hohlkammer 6 des Längsträgers 1 eingeschoben werden kann.

Fig. 2 zeigt verschiedene zweckmäßige Details eines Verbindungsprofils 10. Eine Führungsnut 11 dieses als Strangpreßprofil aus Aluminium ausgeführten Verbindungsprofils 10 auf jeder Oberkante erleichtert das Einschieben in die Hohlkammer 6 des Längsträgers 1. Am vorderen Ende erkennt man Fasen 12, die ebenfalls das Einschieben in die Hohlkammer 6 des Längsträgers 1 erleichtern. Da das Verbindungsprofil 10 möglichst paßgenau in der Hohlkammer 6 des Längsträgers 1 sitzen soll, um eine steife Verbindung der Längsträger 1 zu gewährleisten, sind solche Einschubhilfen von erheblicher Bedeutung.

Das Verbindungsprofil 10 besteht im dargestellten Ausführungsbeispiel aus eloxiertem Aluminium und weist mindestens eine Aufnahme 13 für einen Sicherungsstift 14 auf, hier ausgeführt als Gewindebohrung für den Sicherungsstift 14. Dadurch kann das Verbindungsprofil 10 in einem Längsträger 1 an einem bestimmten Ort festgelegt werden, wenn nämlich ein Quersteg 15 des Längsträgers 1 eine entsprechende, in der Zeichnung nicht dargestellte Aufnahme für den Sicherungsstift 14 aufweist. Ferner hat das Verbindungsprofil 10 einen Spannhebel 16, der hier als Exzenterhebel ausgeführt ist. In Fig. 3 erkennt man angedeutet im Quersteg 15 des Längsträgers 1 einen in Längsrichtung verlaufenden Verstellschlitz 17. In diesem Verstellschlitz 17 kann der Zapfen des Spannhebels 16 am Verbindungsprofil 10 laufen. Man kann so die unvermeidbar auftretenden Anordnungstoleranzen zwischen den Längsträgern 1 zweckmäßig aufnehmen und berücksichtigen.

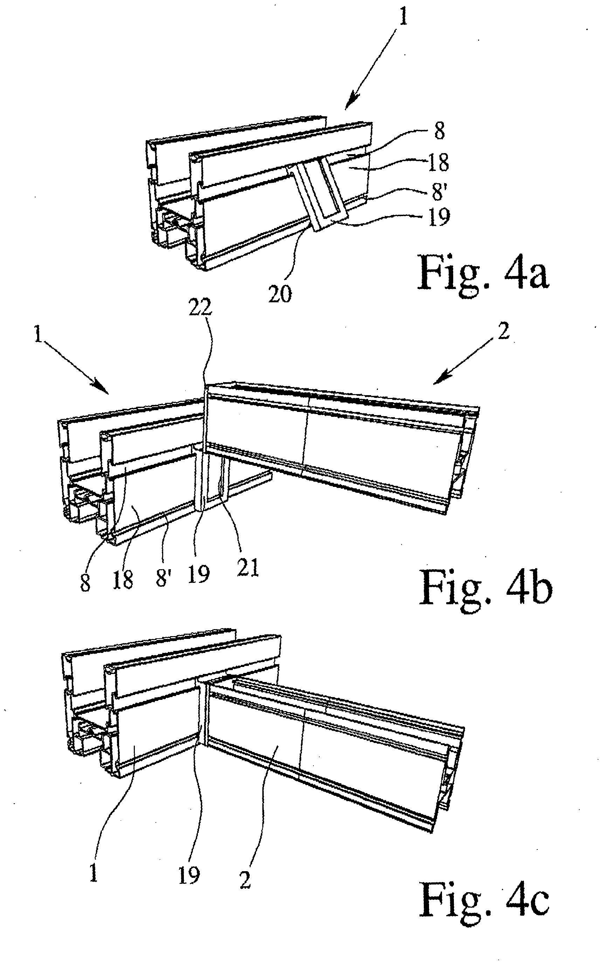

Fig. 4 der Zeichnung befaßt sich mit der besonders bevorzugten Art und Weise der Verbindung der Querträger 2 mit den Längsträgern 1 bei einer erfindungsgemäßen Innenraumdecke. Diese Verbindung kann entgegen dem Stand der Technik hier werkzeuglos durchgeführt werden. Dazu ist vorgesehen, daß ein Querträger 2 mit einem Längsträger 1 jeweils mittels eines in einer außenliegenden Nut 8 an einer Seitenwange 18 des Längsträgers 1 eingehängten Seitenadapters 19, in den die Stirnseite des Querträgers 2 von oben eingeschoben ist, verbunden ist. In Fig. 4a erkennt man, wie der Seitenadapter 19 in die Systemnut 8 an der Seitenwange 18 des Längsträgers 1 eingehängt wird. Unterhalb der Systemnut 8 erkennt man eine weitere Nut 8', die eine Arretierungsleiste 20 am Seitenadapter 19 aufnimmt. Ist der Querträger 2, wie in Fig. 4b, c gezeigt, erst einmal in den Seitenadapter 19 eingehängt, so ist dieser dadurch gleichzeitig mittels der Systemnut 8 und der Arretierungsleiste 20 in der Nut 8' arretiert.

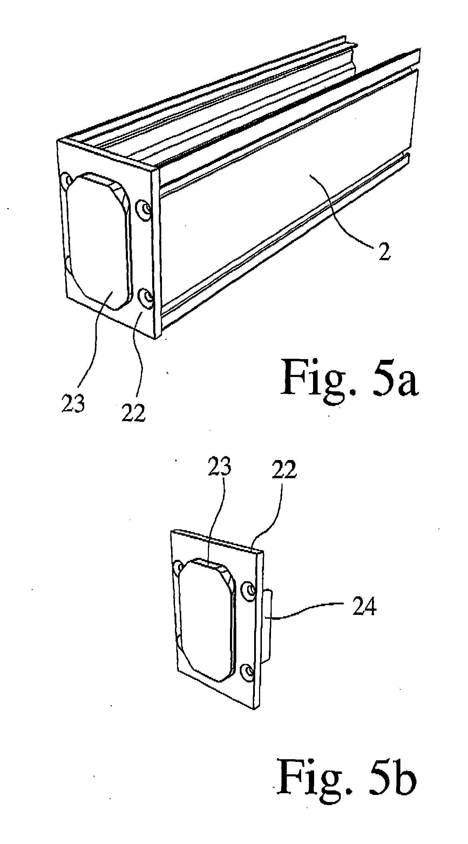

Fig. 4a und b zeigen, daß der Seitenadapter 19 eine nach oben offene Hinterschneidung 21 aufweist. Fig. 5 zeigt dazu, daß an der Stirnseite des Querträgers 2 eine Stirnplatte 22 fest angebracht, hier nämlich angeschraubt ist, die ein zur Hinterschneidung 21 am Seitenadapter 19 passendes Randprofil 23 aufweist. Das Randprofil 23 kann beispielsweise ein Schwalbenschwanzprofil sein. Wird die Stirnplatte 22 beim Einhängen des Querträgers 2 in die Hinterschneidung 21 des Seitenadapters 19 von oben her eingeführt, wie das Fig. 4b, c zeigen, so verankert sich das Randprofil 23 in der Hinterschneidung 21 und der Querträger 2 ist gegenüber dem Längsträger 1 in jeder Richtung arretiert.

Im dargestellten und bevorzugten Ausführungsbeispiel ist vorgesehen, daß der Seitenadapter 19 nicht aus Leichtmetall besteht, sondern aus faserverstärktem Kunststoff ausgeführt ist. Das ist herstellungstechnisch und montagetechnisch zweckmäßiger. Demgegenüber ist die Stirnplatte 22 als Druckgußteil aus Aluminium, ggf. mit einer Beschichtung versehen, ausgeführt.

Fig. 5b zeigt, daß wie schon beim Verbindungsprofil 10 zu Fig. 2 erläutert, auch hier beim Seitenadapter 19 und bei der Stirnplatte 22 Fasen und Abschrägungen vorhanden sind, um das Einführen der Teile ineinander zu erleichtern. Fig. 5b zeigt im übrigen noch Drehsicherungsflanken 24 an der Rückseite der Stirnplatte 22, um diese im Strangpreßprofil des Querträgers 2 sauber drehsicher zu verankern. Dadurch werden die Schraubverbindungen von diesen Kräften weitgehend entlastet.

Fig. 5 läßt im übrigen weiter erkennen, daß im dargestellten und insoweit bevorzugten Ausführungsbeispiel der Querträger 2 so gestaltet ist, daß er in zwei um seine Längsachse um 180° gegeneinander gedrehten Positionen mit dem Längsträger 1 verbunden werden kann. Dazu ist im dargestellten und bevorzugten Ausführungsbeispiel vorgesehen, daß die Stirnplatte 22 am Querträger 2 spiegelsymmetrisch zu ihrer Querachse ausgeführt ist. Damit ist es möglich, wie weiter unten noch erläutert wird, den Querträger 2 in zwei unterschiedlichen Positionen zwischen den Längsträgern 1 anzuordnen. Das erhöht die Befestigungsmöglichkeiten und die Vielfalt der Nutzungsmöglichkeiten am Querträger 2.

In Fig. 3 sieht man in einer perspektivischen Ansicht von der Stirnseite her einen Längsträger 1 mit seinen bereits erwähnten einzelnen Abschnitten. Man erkennt an den Seitenwangen 18 links und rechts jeweils eine Systemnut 8 und darunter jeweils die bereits erwähnte Arretierungsnut 8'. Diese Nuten können auch für andere Zwecke, beispielsweise für Aufhängungen etc. verwendet werden. Ferner erkennt man im Mittelbereich die Hohlkammer 6, die in Verbindung mit dem Verbindungsprofil 10 bereits erläutert worden ist. Auch der Quersteg 15 mit dem Verstellschlitz 17 ist bereits erwähnt worden.

Weiter erkennt man nun, daß der Längsträger 1 eine große, nach oben offene Aufnahme 25 aufweist. Dies ist eine der bereits zu Anspruch 1 generell erwähnten Aufnahmen. Die Aufnahme 25 liegt hier in der Mitte des Längsträgers 1, dieser ist also bezogen auf die vertikale Mittelebene spiegelsymmetrisch ausgeführt.

Man erkennt an den Innenrändem der oberen Aufnahme 25 Befestigungsstreifen 26, hier aus Klettband, zur werkzeuglosen Befestigung der bereits erwähnten Gewebestoffbahnen.

Weiter erkennt man seitlich neben der oberen Aufnahme 25 außenliegende Nuten 27, die ebenfalls der Anbringung von Gewebestoffbahnen dienen können, wenn man Befestigungsstreifen 26 nicht haben möchte oder mit schwereren Gewebestoffbahnen arbeitet. Diese Nuten 27 können auch für herunterhängende Stoffbahnen oder sonstige Befestigungen dienen, Im übrigen haben diese Nuten 27 einen Nebeneffekt beim Transport von Längsträgern 1. Man erkennt an der Unterseite des Längsträgers 1 rechts und links symmetrisch angeordnete kleine Wulste 28. Diese greifen beim Aufeinanderstapeln von Längsträgern 1 in die Nuten 27 an der Oberseite ein und verhindern, daß aufeinandergestapelte Längsträger 1 seitlich gegeneinander verrutschen.

An den Innenwänden der oberen Aufnahme 25, vorzugsweise in deren unterer Hälfte, sind einander gegenüberliegende Hinterschneidungen 29 vorgesehen. Deren Funktion wird später noch genauer erläutert.

Bei der allgemeinen Darstellung der Innenraumdecke in Fig. 1 ist bereits auf die Existenz von Tragelementen 3 für den Fall der Abhängung dieser Innenraumdecke hingewiesen worden. Als Tragelemente 3 kommen alle Arten von langgestreckten Systemen in Frage, insbesondere also Gewindestangen, Gurte, Stahlseile etc..

Oben ist bereits darauf hingewiesen worden, daß der Längsträger 1 in jeder Seitenwange 18 eine Systemnut 8 aufweist. Die Systemnut 8 kann genutzt werden, um mehrere Längsträger 1, die rechtwinklig aufeinanderstoßen, miteinander zu verbinden. Fig. 10 zeigt dazu, daß zwei Längsträger 1 im rechten Winkel jeweils mittels eines in die aneinander stoßenden außenliegenden Nuten 8 eingesteckten und darin verspannten Eckverbinders 46 verbunden sind. Angedeutet sind Madenschrauben in dem Eckverbinder 46, mit dem der Eckverbinder 46 in der jeweiligen Nut 8 arretiert werden kann. Dadurch sind die Längsträger 1 hier miteinander fest und solide verbunden.

Natürlich können die Längsträger 1 und die Querträger 2 im Rahmen statischer Berechnungen zulässige, im übrigen im wesentlichen beliebige Abmessungen, insbesondere Wandstärken etc. haben. Um eine Vorstellung von in der Praxis relevanten Maßen zu haben ist festzuhalten, daß im dargestellten und bevorzugten Ausführungsbeispiel vorgesehen ist, daß die Breite der Längsträger 1 ca. 100 bis 120 mm beträgt und/oder daß die Höhe der Längsträger 1 ca. 110 bis 130 mm beträgt und/oder daß die Länge der Längsträger 1 mehrere m, vorzugsweise ca. 6 Meter, beträgt. In entsprechender Weise gilt für die Querträger 2, daß die Breite der Querträger 2 ca. 50 bis 70 mm beträgt und/oder daß die Höhe der Querträger 2 ca. 70 bis 90 mm beträgt und/oder daß die Länge der Querträger 2 mehrere Meter, vorzugsweise ca. 3 m, beträgt, also das Achsmaß der Innenraumdecke ca. 3 m beträgt.

## Patentansprüche

1. Abhängbare, nicht tragende Innenraumdecke mit
eine Längsrichtung der Decke definierenden Längsträgern (1) und
eine Querrichtung der Decke definierenden, die Längsträger (1) seitlich verbindenden Querträgern (2),
wobei die Querträger (2) von den Längsträgern (1) getragen werden und
wobei, vorzugsweise, zur Abhängung der Längsträger (1) von einer Tragdecke langgestreckte Tragelemente (3) vorgesehen sind,
wobei die Längsträger (1) und die Querträger (2) als Strangpreßprofile aus Leichtmetall, insbesondere Aluminium, oder aus einem faserverstärkten Kunststoff ausgeführt sind, die einerseits geschlossene Hohlkammern (6) zur Versteifung, andererseits nach außen offene Aufnahmen (7) und Nuten (8) zur Anbringung von Montage- und Zusatzteilen bzw. zu Verbindungszwecken aufweisen,
**dadurch gekennzeichnet,**
**daß** mehrere in Längsrichtung hintereinander angeordnete Längsträger (1) jeweils mittels eines sich in Längsrichtung innerhalb beider Längsträger (1) erstreckenden Verbindungsprofils (10) miteinander verbunden sind, wobei das Verbindungsprofil (10) als Strangpreßprofil aus Leichtmetall, insbesondere aus Aluminium, oder aus einem faserverstärkten Kunststoff ausgeführt ist.

2. Innenraumdecke nach Anspruch 1, **dadurch gekennzeichnet,**
**daß** das Verbindungsprofil (10) jeweils in eine geschlossene Hohlkammer (6) der angrenzenden Längsträger (1) eingesteckt ist.

3. Innenraumdecke nach Anspruch 1 oder 2, **dadurch gekennzeichnet,**
**daß** der Längsträger (1) einen Quersteg (15) aufweist und
**daß** das Verbindungsprofil (10) mindestens eine Aufnahme (13) für einen Sicherungsstift (14) und/oder für einen Spannhebel (16) und der Quersteg (15) des Längsträgers (1) eine Aufnahme für den Sicherungsstift (14) und/oder einen in Längsrichtung verlaufenden Verstellschlitz (17) für den Spannhebel (16) aufweist.

4. Innenraumdecke nach Anspruch 3, **dadurch gekennzeichnet,**
**daß** die Aufnahme (13) für den Sicherungsstift (14) als Gewindebohrung ausgeführt ist.

5. Abhängbare, nicht tragende Innenraumdecke mit
eine Längsrichtung der Decke definierenden Längsträgern (1) und
eine Querrichtung der Decke definierenden, die Längsträger (1) seitlich verbindenden Querträgern (2),
wobei die Querträger (2) von den Längsträgern (1) getragen werden und
wobei, vorzugsweise, zur Abhängung der Längsträger (1) von einer Tragdecke langgestreckte Tragelemente (3) vorgesehen sind,
wobei die Längsträger (1) und die Querträger (2) als Strangpreßprofile aus Leichtmetall, insbesondere Aluminium, oder aus einem faserverstärkten Kunststoff ausgeführt sind, die einerseits geschlossene Hohlkammern (6) zur Versteifung, andererseits nach außen offene Aufnahmen (7) und Nuten (8) zur Anbringung von Montage- und Zusatzteilen bzw. zu Verbindungszwecken aufweisen, insbesondere nach einem der Ansprüche 1 bis 4,
**dadurch gekennzeichnet,**
**daß** ein Querträger (2) mit einem Längsträger (1) jeweils mittels eines in einer außenliegenden Nut (8) an einer Seitenwange (18) des Längsträgers (1) eingehängten Seitenadapters (19), in den die Stirnseite des Querträgers (2) von oben eingeschoben ist, verbunden ist.

6. Innenraumdecke nach Anspruch 5, **dadurch gekennzeichnet,**
**daß** der Seitenadapter (19) eine oben offene Hinterschneidung (21) aufweist und
**daß** an der Stirnseite des Querträgers (2) eine Stirnplatte (22) fest angebracht, insbesondere angeschraubt ist, die ein zur Hinterschneidung (21) passendes Randprofil (23) aufweist.

7. Innenraumdecke nach Anspruch 5 oder 6, **dadurch gekennzeichnet,**
**daß** der Seitenadapter (19) aus faserverstärktem Kunststoff ausgeführt ist und/oder daß die Stirnplatte (22) als Druckgußteil aus Leichtmetall, insbesondere aus Aluminium, ausgeführt ist.

8. Innenraumdecke nach einem der Ansprüche 5 bis 7, **dadurch gekennzeichnet,**
**daß** der Querträger (2) so gestaltet ist, daß er in zwei um seine Längsachse um 180° gegeneinander gedrehten Positionen mit dem Längsträger (1) verbunden werden kann, insbesondere daß die Stirnplatte (22) des Querträgers (2) spiegelsymmetrisch zu ihrer Querachse ausgeführt ist.

9. Innenraumdecke nach einem der Ansprüche 1 bis 8, **dadurch gekennzeichnet,**
**daß** der Längsträger (1) an jeder Seitenwange (18) mindestens eine außenliegende, hinterschnittene Nut (8) aufweist und daß zwei Längsträger (1) im rechten Winkel jeweils mittels eines in die aneinander stoßenden außenliegenden Nuten (8) eingesteckten und darin verspannten Eckverbinders (46) verbunden sind.
